# FASCICULE DE BREVET EUROPEEN

(11) **EP 4 561 409 B1**
(45) Date de publication et mention de la délivrance du brevet: **09.09.2026**
(21) Numéro de dépôt: 23761176.9
(22) Date de dépôt: 28.07.2023
(51) Int. Cl.: A47J 36/02, B05D 5/08

(54) **REVÊTEMENT NON-FLUORÉ MONOCOUCHE À BASE DE RÉSINE SILICONE ET DE POLYMÈRE THERMOPLASTIQUE**
EINSCHICHTIGE NICHT-FLUOR-BESCHICHTUNG AUF BASIS VON SILIKONHARZ UND THERMOPLASTISCHEM POLYMER
SINGLE-LAYER NON-FLUORINE COATING BASED ON SILICONE RESIN AND THERMOPLASTIC POLYMER

(30) Priorité: 29.07.2022 FR 2207907
(43) Date de publication de la demande: 04.06.2025
(73) Titulaire: SEB S.A., 69130 Ecully (FR)
(72) Inventeur: GANTILLON, Barbara, 69134 Ecully Cedex (FR); LE BRIS, Stéphanie, 69134 Ecully Cedex (FR); TANGUY, Perrine, 69134 Ecully Cedex (FR)
(74) Mandataire: SEB Développement
(86) Numéro de dépôt international: PCT/FR2023/051206
(87) Numéro de publication internationale: WO 2024/023469

(56) Documents cités:
- EP-A2- 0 974 404
- CN-A- 112 745 758
- US-A1- 2022 073 785

## Description

Le domaine de l'invention est celui des articles culinaires revêtus sur une de leurs faces par un revêtement et plus précisément, les revêtements à base de résine silicone de ces articles. Dans le domaine des articles culinaires, les revêtements à base de fluoropolymères et en particulier de polytétrafluoroéthylène (PTFE) sont connus du grand public pour leurs propriétés d'anti-adhésivité et de résistance à la température.

Cependant, ces revêtements présentent une faible résistance mécanique.

La demande WO 2020/144051 concerne un revêtement à base de fluoropolymères dont la résistance mécanique à l'abrasion est améliorée par l'intégration de charges organiques (SiC) et minérales (Al₂O₃) dans les couches de primaires et de finition du revêtement. CN 112 745 758 A divulgue également un élément de cuisson revêtu comprenant une couche pourvue d'au moins un polymère fluoré.

Le gain de performances atteint concernant la résistance mécanique est satisfaisant mais toujours pas optimal.

Les revêtements à base de fluoropolymères sont destinés, en premier lieu, aux poêles et casseroles mais d'autres applications peuvent être envisagées dans le domaine de la moulerie (moules, plats à gâteaux, gaufriers, etc.) ou du petit équipement domestique (cuiseurs à riz, cuves de friteuse, crêpières électriques) du fait de leur emboutissabilité.

Une alternative aux revêtements PTFE consiste à utiliser des revêtements dits « céramiques », mis au point via le procédé sol-gel et l'utilisation d'orthosilicate de tétraéthyle (EP 2 806 776 B1). Ces revêtements ont pour particularité d'être durs et résistants à l'usure mécanique mais présentent un comportement cassant et une anti-adhésivité moindre comparé aux revêtements à base de fluoropolymères.

En outre, ces revêtements sont peu adaptés à la moulerie et au petit équipement domestique du fait de leur manque d'emboutissabilité.

Dans le domaine de la moulerie (grand public ou industrielle), les revêtements à base de fluoropolymères ne sont pas aussi répandus car les contraintes de résistance à la température sont moins élevées (max 220°C) et permettent l'utilisation d'autres types de revêtements, tels que ceux en silicone.

Les résines silicones pures sont décrites comme anti-adhésives et résistantes à des températures supérieures à 220-230°C. En revanche, elles sont considérées comme peu adhérentes au substrat.

A l'inverse, les résines silicones-polyesters sont très répandues dans la moulerie car elles sont anti-adhésives tout en étant adhérentes au substrat et compatibles avec des procédés d'emboutissage. Néanmoins, elles se dégradent à des températures supérieures à 230°C. En effet, la plage de température d'usage des articles culinaires se situe entre 50 et 250°C et il n'est pas surprenant de monter à des températures de 300°C voire 350°C dans le cas d'articles avec des fonds induction. Leur utilisation n'est donc pas compatible avec les températures d'usage dans le domaine des articles culinaires.

### RESUME DE L'INVENTION

Un premier objet de l'invention concerne un élément de cuisson revêtu selon la revendication 1.

Un autre objet de l'invention concerne également un procédé de fabrication d'un élément de cuisson revêtu selon la revendication 10.

Un autre objet de l'invention concerne un article culinaire selon la revendication 11.

Un autre objet de l'invention concerne un appareil électrique de cuisson selon la revendication 14.

### DEFINITIONS

Par le terme « couche » ou « revêtement », il faut comprendre au sens de la présente invention une couche continue ou discontinue. Une couche continue (ou appelée également couche monolithique) est un tout unique formant un aplat total recouvrant complètement la surface sur laquelle elle est posée. Une couche discontinue (ou couche non monolithique) peut comprendre plusieurs parties n'étant pas ainsi un tout unique.

Par « pigment ou composition pigmentaire thermochrome », il faut comprendre au sens de la présente invention, un pigment ou une composition pigmentaire qui change de couleur en fonction de la température dans un domaine de température donné, ce changement étant réversible. Ce changement de couleur est visible par l'utilisateur à l'œil nu et à distance d'utilisation classique.

On entend par « pigment thermostable » un pigment qui ne présente pas de changement de couleur lorsqu'il est soumis à une élévation de température dans un domaine de température donné ou qui présente un changement de teinte lorsqu'il est soumis à une élévation de température dans un domaine de température donné tellement faible qu'il n'est pas visible par l'utilisateur à l'œil nu et à distance d'utilisation classique.

De préférence, les pigments thermostables présentent un écart de couleur ΔE* entre 25°C et 200°C inférieur à 10, ΔE* étant défini par la formule CIE1976 dans l'espace colorimétrique CIELAB : $Δ E * = \sqrt{{\left({{L}_{2}}^{∗}-{{L}_{1}}^{∗}\right)}^{2} + {\left({{a}_{2}}^{∗}-{{a}_{1}}^{∗}\right)}^{2} + {\left({{b}_{2}}^{∗}-{{b}_{1}}^{∗}\right)}^{2}}$
L₁*, a₁* et b₁* caractérisant les valeurs L*a*b dudit composé à température ambiante
L₂*, a₂* et b₂* caractérisant les valeurs L*a*b dudit composé à 200°C.

Par l'expression « article culinaire », il faut comprendre au sens de la présente invention un objet destiné à cuisiner. Pour ce faire, il est destiné à recevoir un traitement thermique.

Par l'expression « objet destiné à recevoir un traitement thermique », il faut comprendre au sens de la présente invention un objet qui sera chauffé par un système extérieur de chauffage tels que des poêles, des casseroles, des sauteuses, des woks, des grilles de barbecues et qui est apte à transmettre l'énergie calorifique apportée par ce système extérieur de chauffage à un matériau ou aliment au contact dudit objet.

Par l'expression « appareil électrique de cuisson », il faut comprendre au sens de la présente invention un objet chauffant possédant son propre système de chauffage tels que crêpière électrique, appareil électrique à raclette, appareil électrique à fondue, grill électrique, plancha électrique, cuiseur électrique, machine à pain, appareil électrique de cuisson sous pression.

On entend par « revêtement », la couche recouvrant le substrat métallique et adhérent à ce substrat.

On entend par « revêtement à base de résine silicone » un revêtement qui comprend une ou plusieurs résine(s) silicone dans sa couche. Le revêtement selon l'invention obtenu est avantageusement solide, on entend par « solide » la caractéristique d'un matériau cohésif insoluble dans l'eau, dans les solvants usuels, dans les composants alimentaires tels que les mélanges aqueux ou gras, même si le matériau peut présenter une grande dureté ou une grande souplesse tel un élastomère.

Dans la présente invention, les % en poids sont exprimés en poids sec, c'est-à-dire sans solvant.

### FIGURES

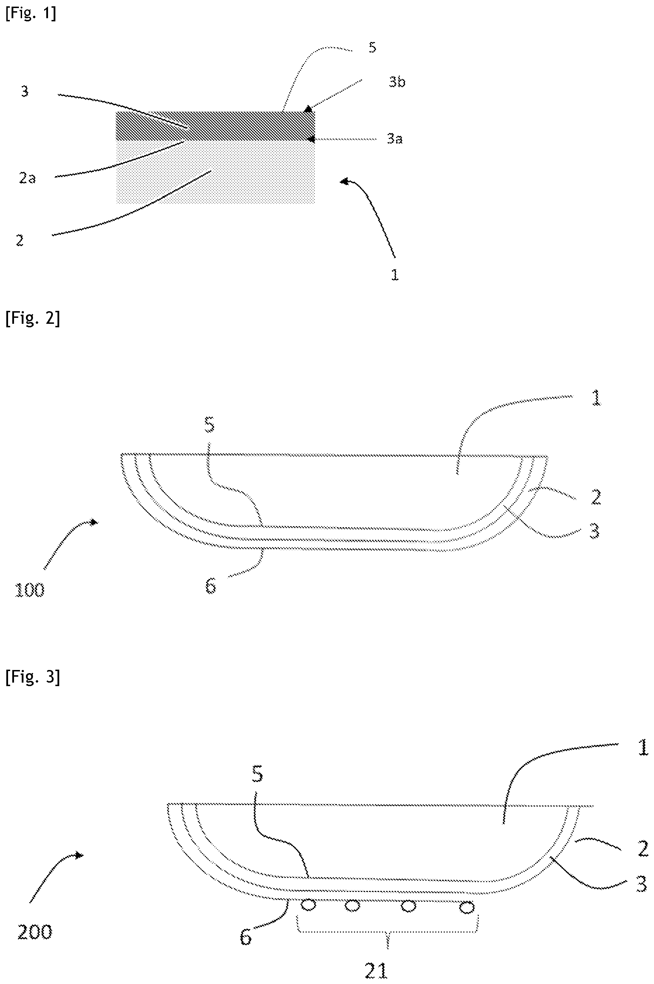

- [Fig.1] :: schéma d'élément de cuisson selon l'invention
- [Fig.2] :: schéma d'article culinaire selon l'invention
- [Fig.3] :: schéma d'appareil électrique de cuisson selon l'invention

### DESCRIPTION DETAILLEE DE L'INVENTION

L'invention concerne un élément de cuisson revêtu (1) pour article culinaire ou appareil électrique de cuisson, comportant un substrat métallique (2) revêtu sur au moins une face (2a) par une couche unique (3) en contact par une de ses faces (3a) avec le substrat métallique (2) et dont l'une de ses faces (3b) forme face de cuisson (5), laquelle couche (3) est constituée d'au moins 40% en poids d'un ou plusieurs polymère(s) thermoplastique(s), d'une ou plusieurs résine(s) silicone et éventuellement d'une ou plusieurs charge(s) et/ou d'un ou plusieurs additif(s) et/ou d'un ou plusieurs agent(s) colorant(s).

Selon l'invention, la couche unique (3) en contact par une de ses faces (3a) avec le substrat métallique (2) est sous forme d'une seule couche ou encore une monocouche.

Avantageusement, la couche unique (3) forme un revêtement qui revêt le substrat métallique (2). Ce revêtement présente des propriétés antiadhésives et forme un revêtement antiadhésif.

Selon l'invention, la couche unique (3) en contact par une de ses faces (3a) avec le substrat métallique (2) constitue le revêtement de l'élément de cuisson, également appelé revêtement monocouche.

L'au moins une face revêtue (2a) est donc une face de cuisson. Autrement dit, le revêtement de l'élément de cuisson (1) selon l'invention est destiné à être en contact avec les aliments.

La couche unique (3) est en contact par une de ses faces (3b) avec des aliments qui forme ainsi une face de cuisson (5).

Le revêtement de l'élément de cuisson (1) selon l'invention ne comprend pas de polymère fluoré, aussi appelé fluoropolymère. En d'autres termes, ledit revêtement est dépourvu de polymères fluorés.

Selon l'invention, l'épaisseur de la couche (3) est comprise entre 10 µm et 100 µm, de préférence entre 20 µm et 85 µm, de manière particulièrement préférée entre 30 µm et 70 µm.

### SUBSTRAT METALLIQUE

Avantageusement, ledit substrat métallique (2) est un substrat en aluminium, en acier inoxydable, en fonte de fer ou d'aluminium, en fer, en titane ou en cuivre.

Par aluminium au sens de la présente invention s'entend d'un métal constitué à 100 % d'aluminium ou d'un alliage d'aluminium.

Avantageusement, le substrat métallique (2) est un substrat en aluminium, en acier inoxydable ou un substrat métallique multicouches. Le substrat métallique (2) peut être un substrat bicouches ou tri-couches, ces multicouches pouvant être obtenues par exemple par colaminage, par diffusion à chaud sous charge (solid state bonding) ou par frappe (impact bonding) à chaud ou à froid.

De préférence, le substrat métallique (2) comprend une alternance de couches en métal et/ou en alliage métallique.

Selon un mode de réalisation, le substrat métallique (2) est un substrat en alliage d'aluminium, en acier inoxydable ou un substrat métallique multicouches dont la face (2a) est en alliage d'aluminium ou en acier inoxydable.

De préférence, le substrat métallique (2) est un substrat en aluminium.

Avantageusement, l'épaisseur du substrat métallique (2) est comprise entre 0,5 mm et 10 mm.

Avantageusement, la face (2a) du substrat métallique (2) a subi préalablement un traitement de surface permettant d'améliorer l'adhésion du revêtement audit substrat.

Selon un mode de réalisation, la surface de la face (2a) du substrat métallique (2) a subi un traitement de surface, le dit traitement de surface étant une attaque chimique, un brossage, une hydratation, un sablage, un grenaillage, un traitement physicochimique de type plasma ou corona ou laser, une activation chimique ou une combinaison de ces différentes techniques.

Avantageusement, la face du substrat (2a) sur laquelle va être appliqué le revêtement (3) selon l'invention peut être traitée de façon à augmenter sa surface spécifique ; pour un substrat en aluminium, ce traitement peut être fait par anodisation (création d'une structure tubulaire d'alumine), par attaque chimique, par sablage, par brossage, par grenaillage ou par ajout de matière par le biais d'une technologie telle que la projection thermique (flamme, plasma ou arc spray). Les autres substrats métalliques peuvent également être polis, sablés, brossés, microbillés ou recevoir un ajout de matière par le biais d'une technologie telle que la projection thermique (flamme, plasma ou arc spray).

A titre de substrats métalliques utilisables dans la présente invention, on peut avantageusement citer les substrats en aluminium anodisé ou non, éventuellement poli, brossé, sablé, grenaillé ou microbillé, les substrats en alliage d'aluminium anodisé ou non, éventuellement poli, brossé, sablé ou microbillé, les substrats en acier éventuellement poli, brossé, sablé, grenaillé ou microbillé, les substrats en acier inoxydable éventuellement poli, brossé, sablé ou microbillé, les substrats en fonte d'acier, d'aluminium ou de fer, les substrats en cuivre éventuellement martelé ou poli.

Avantageusement, le substrat peut être choisi parmi les substrats comprenant les couches acier inoxydable ferritique/aluminium/acier inoxydable austénitique, les substrats comprenant les couches acier inoxydable/aluminium/cuivre/aluminium/acier inoxydable austénitique, les calottes en aluminium de fonderie, en aluminium ou en alliages d'aluminium doublées d'un fond extérieur en acier inoxydable, les substrats colaminés métalliques, par exemples les substrats colaminés bicouches comprenant une couche en acier inoxydable (par exemple destinée à constituer la face intérieure de l'article) et une couche en aluminium ou en alliage d'aluminium, anodisé ou non (par exemple destinée à constituer la face extérieure de l'article).

Avantageusement, la rugosité arithmétique moyenne Ra de la surface de la face (2a) du substrat métallique (2) est supérieure ou égale à 1 µm.

La rugosité arithmétique moyenne Ra est mesurée au moyen d'un rugosimètre selon la norme ISO 4287. Ra représente la moyenne arithmétique des écarts à la moyenne. La topographie de surface peut être étudiée notamment avec un profilomètre avec palpeur muni d'un stylet fin équipé d'une pointe en diamant, ou encore avec un appareil de métrologie optique type Altisurf^{®}, dans lequel un capteur confocal chromatique permet une mesure sans contact. L'étude de cette topographie de surface permet de définir la rugosité arithmétique moyenne Ra.

### RESINES SILICONE

Dans le texte de la description, l'expression « résine silicone » est utilisée indifféremment pour mentionner le silicone avant sa réticulation ou après sa réticulation. Dans le texte de la description, l'expression « silicone » désigne un matériau organopolysiloxane. La réticulation est l'étape qui permet de transformer le silicone en un matériau insoluble, par exemple par polyaddition, polycondensation ou déshydrogénation. La réticulation est réalisée à partir de précurseurs qui sont généralement des huiles ou résines silicones, qui réticulent pour obtenir un réseau tridimensionnel formant un matériau appelé résine silicone, dans la description.

Cette réticulation, peut se faire par activation thermique, ou activation chimique à l'aide d'un catalyseur, comme par exemple le platine.

Les résines silicone peuvent être obtenues à partir de précurseurs, avantageusement solubles dans un solvant ou en émulsion dans l'eau, tel que des huiles ou des résines réticulables, notamment choisis parmi: un hydrure de silicone, une résine huile silicone comprenant au moins un groupe vinyle (-CH=CH₂), une résine silicone ou silicone-polyester (copolymère) comprenant au moins un groupe alkoxy, par exemple méthoxy ou éthoxy, et/ou une résine silicone ou silicone-polyester (copolymère) comprenant au moins un groupe alkoxy, en particulier éthoxy, ou un groupe hydroxy et leurs mélanges. Ces précurseurs ont la capacité de réticuler afin d'obtenir une résine silicone qui se caractérise par son insolubilité et sa forme sensiblement solide.

Avantageusement, ces précurseurs sont polymériques ou oligomériques, soit sous forme d'huiles silicones de degré de branchement variable, soit sous forme de résines silicones de degré de pré-reticulation variable ou de copolymères de résines silicones telles que les résines silicone-polyester, silicone-alkydes, silicone-polyuréthanes, silicone-époxy, soit sous forme de mélange d'huiles silicones, de résines silicones et de copolymères de résines silicones. Les atomes silicium peuvent être substitués par des groupements alkyl (en particulier methyl) ou aryl (en particulier phényl) ou leurs mélanges. Les huiles ou résines comportent de préférence un ou plusieurs (2, 3 ou plus) groupements fonctionnels hydroxy ou alkoxy (en particulier methoxy, éthoxy, butoxy) comme substituants d'atomes de silicium.

Avantageusement, la ou les résine(s) silicone, obtenue(s) après réticulation de leurs précurseurs, c'est-à-dire réticulée(s), est/sont choisie(s) dans le groupe constitué de résines méthyl silicones et/ou phényl silicones et/ou méthyl-phényl-silicones, résine méthyl silicone-polyester (copolymères), résine phényl silicone-polyester (copolymères), résine méthyl-phényl silicone-polyester (copolymères), résine silicone-alkyde (copolymères), résine silicone modifiée et leurs mélanges.

Avantageusement, la ou les résine(s) silicone est/sont choisie(s) dans le groupe constitué de résines méthyl silicones et/ou phényl silicones et/ou méthyl-phényl-silicones, résine méthyl silicone-polyester (copolymères), résine phényl silicone-polyester (copolymères), résine méthyl-phényl silicones-polyester (copolymères), résine silicone-alkyde (copolymères), résine silicone modifiée et leurs mélanges.

La résine silicone de la couche unique (3) forme un réseau qui peut être constitué d'une combinaison de 4 unités organosiloxanes simples dénommées M, D, T et Q en fonction du degré de substitution par l'oxygène de l'atome de silicium, telles que décrites dans le tableau suivant, où R est un substituant organique décrit dans la suite.

| **Structure** | **Degré de substitution par l'oxygène** | **Symbole** |
|---|---|---|
| R₃Si-O- | 1 | M |
| 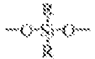 | 2 | D |
| 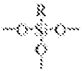 | 3 | T |
| 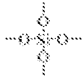 | 4 | Q |

Le matériau ou polymère organopolysiloxane est obtenu par réticulation à partir de précurseurs qui peuvent être monomériques ou polymériques, ou de manière intermédiaire qui peuvent être oligomériques. Le polymère organopolysiloxane peut être obtenu aussi à partir d'un mélange de ces différentes sortes de précurseurs. Lorsque le réseau contient un nombre plus élevé d'unités T et Q, que D, la densité de réticulation est plus élevée. La répartition entre les unités M, D, T et Q dépend de la structure chimique des précurseurs, en particulier de cette répartition M, D, T, Q au sein des précurseurs.

Les précurseurs polymériques sont des organopolysiloxanes. Ces macromolécules sont formées d'unités M, D, T, et/ou Q comme décrites dans le tableau, où R est indépendamment un groupement alkyl, en particulier méthyl, ou aryl, en particulier phényl, différentes natures de R pouvant être présentes sur la même macromolécule.

Les organopolysiloxanes peuvent être soit linéaires ou peu branchés (majorité de groupes D), soit branchés ou très branchés (majorité de groupes T et Q). Les organopolysiloxanes linéaires ou peu branchés sont généralement liquides, plus ou moins visqueux à température ambiante, et sont appelés huiles silicones. Les organopolysiloxanes branchés ou très branchés (préréticulés) constituent un réseau à l'échelle de la macromolécule individuelle et sont appelés résines silicones. A température ambiante, les résines sont sensiblement sous forme solide, ou sous forme liquide à condition en particulier d'avoir une masse moléculaire assez basse, sous forme de solution dans un solvant ou sous forme d'émulsion aqueuse. Elles peuvent être copolymérisées avec des polymères ou oligomères organiques ne comportant pas de silicium, choisis en particulier parmi les polyesters, les acryliques, les alkydes, les polyuréthanes, les résines époxy.

Lorsque la réticulation est une hydrolyse-polycondensation : elle s'effectue grâce aux fonctions réactives hydroxy ou alkoxy, en particulier méthoxy, éthoxy ou butoxy, présentes sur l'organopolysiloxane.

Lorsque la réticulation est une polyaddition (ou hydrosilylation) : elle s'effectue par réaction entre les fonctions réactives vinyles (-CH=CH₂) présentes sur l'un des organopolysiloxanes et les fonctions réactives hydrure de silyle (Si-H) présentes sur l'autre organopolysiloxane mélangé au premier.

Toutes ces fonctions réactives sont présentes sur chaque organopolysiloxane au nombre d'au moins une et peuvent être présentes au nombre de 2, 3, ou plus ... autant que le permet la structure moléculaire. Les huiles silicones comportant au moins une fonction réactive sont appelées « huiles réactives ». Les fonctions réactives peuvent se trouver soit en bout de chaîne macromoléculaire (terminaison), soit réparties sur la chaîne.

Les résines silicones-polyester en particulier ont des ratios massique silicone/polyester par exemple 90/10, 80/20, 70/30, 60/40, 50/50, 40/50, 30/70, 20/80, 10/90, avantageusement entre 80/20 et 50/50.

Les huiles silicones PDMS linéaires, pures ou pré-émulsionnées dans l'eau, sont caractérisées en premier lieu par leur masse moléculaire, directement fonction croissante de la viscosité de l'huile pure. Elles sont ensuite caractérisées par la présence ou non de fonctions réactives, par exemple hydroxyles sur les atomes silicium (silanol), leur nombre et leur emplacement sur la chaîne moléculaire. Par exemple, des huiles réactives avec des viscosité comprises entre 50 et 20 000 mPa.s, et en particulier entre 300 et 5 000 mPa.s, peuvent être utilisées, possédant au moins une fonction réactive, préférentiellement au moins 2, qui peuvent être placées en bout de chaîne.

Les précurseurs polymériques réagissant par polyaddition peuvent inclure par exemple le polymethylhydrosiloxane, le vinylméthylsiloxane, le polydiméthylsiloxane (PDMS) terminé vinyl en particulier linéaire, les copolymères diphénylsiloxane-diméthylsiloxane terminés vinyl, les polydiméthylsiloxanes terminés hydrure, les polyphénylméthylsiloxanes terminés hydrure, le vinylméthylsiloxane cyclique, la résine vinyl-MQ, le polyméthylhydrosiloxane terminé trimethylsilyl, copolymère de méthylhydrosiloxane et diméthylsiloxane terminé triméthylsiloxane, l'hydrure de résine MQ, et similaires, ainsi que leurs combinaisons.

Les précurseurs polymériques réagissant par hydrolyse-polycondensation, qu'ils soient des résines silicones ou des huiles silicones, peuvent inclure par exemple des poly(méthylsilsesquioxanes), poly(propylsilsesquioxanes), poly(phénylsilsesquioxanes), le polydimethylsiloxane (PDMS), le polydimethylsiloxane (PDMS), terminé trimethylsilyl, le polydimethylsiloxane (PDMS) terminé hydroxyl, le polydimethylsiloxane (PDMS) terminé silanol, le polyphénylsiloxane (PDMS) terminé silanol, le copolymère de diphénylsiloxane-diméthylsiloxane terminé silanol, des poly(2-acétoxyéthylsilsesquioxanes), des alkoxy-silanes organo-modifies et leurs oligomères, et toutes macromolécules similaires ainsi que leurs mélanges.

Le matériau ou polymère organopolysiloxane peut aussi être obtenu par la réticulation d'un mélange d'un ou plusieurs précurseurs monomériques et d'un ou plusieurs précurseurs polymériques tels que décrits ci-dessus, ainsi que d'un ou plusieurs précurseurs oligomériques qui peuvent être linéaires, branchés ou cycliques. Ces précurseurs oligomériques ont une masse moléculaire plus faible que les précurseurs polymériques. Des précurseurs polymériques et/ou oligomériques comportant un nombre de fonctions réactives telles que décrites plus haut supérieur à 2, avantageusement bien supérieur à 2, peuvent être ajoutés au mélange comme « co-liant » afin de favoriser une densité de réticulation élevée du polymère organopolysiloxane finalement obtenu.

Les précurseurs monomériques, oligomériques et/ou polymériques, en particulier les résines silicones, copolymérisées ou non avec un polymère organique, jouent le rôle de liant polymérique en vue d'obtenir le polymère organopolysiloxane solide combiné aux thermoplastiques de chaque couche.

Les précurseurs organopolysiloxanes de type huile silicone peuvent être considérés comme des additifs s'ils sont ajoutés en petite quantité (en générale entre 0,1 et 5% en sec) dans l'ensemble de la formule d'une couche, indépendamment des autres composants pour la formation du polymère organopolysiloxane solide.

La réticulation peut nécessiter un catalyseur :
- Dans le cas de la réticulation d'organopolysiloxanes par hydrolyse-polycondensation, la formule peut inclure un catalyseur métallique, comme par exemple des complexes métalliques à base de platine, d'étain, de zinc, de zirconium et de cerium, en particulier les complexes platine-cyclovinylméthyl-silxane, l'éthylhexanoate d'étain, l'éthylhexanoate de zinc, l'éthylhexanoate de zirconium, l'éthylhexanoate de cérium, et le dibutyl laurate d'étain.
- Dans le cas de la réticulation d'organopolysiloxanes par hydrosylilation, l'ajout d'un catalyseur peut être nécessaire : ce peut être par exemple le platine ou un catalyseur adapté à base de platine tel que le catalyseur de Karstedt ou le catalyseur d'Ashbys.

Un agent de réticulation, porteur par exemple de liaisons Si-H peut être présent.

Selon un mode de réalisation, la proportion de résine silicone dans la couche unique (3) est supérieure ou égale à 20 % en poids par rapport au poids total respectivement de la couche (3).

Selon un autre mode de réalisation, la proportion de résine silicone dans la couche unique (3) est supérieure ou égale à 40 % en poids par rapport au poids total respectivement de la couche (3).

Selon encore un autre mode de réalisation, la proportion de résine silicone dans la couche unique (3) est supérieure ou égale à 50 % en poids par rapport au poids total respectivement de la couche (3).

### POLYMERES THERMOPLASTIQUES

Avantageusement, le ou les polymère(s) thermoplastique(s) est/sont choisi(s) dans le groupe constitué de polyaryléthercétone(s) (PAEK), de polymère(s) thermoplastique(s) aromatiques comme les poly(aryléthersulfones) (PAES), les poly(arylène sulfures) (PAS) ou le poly(phenylene oxyde) (PPO), de polymères à cristaux liquides, de polymères thermoplastiques hétérocycliques et leurs mélanges.

### PAEK

Avantageusement, la ou les polyaryléthercétone(s) (PAEK) est(sont) choisie(s) dans le groupe constitué de : polyethercétones (PEK), polyetherethercétone (PEEK), polyethercétonecétones (PEKK), polyetherethercétonecétones (PEEKK) et polyethercétoneethercétonecétones (PEKEKK), de manière particulièrement préférée est(sont) des PEEK.

### Autres polymères thermoplastiques aromatiques

A titre de polymère(s) thermoplastique(s) aromatiques, il est cité à titre d'exemple convenant selon l'invention le poly(phenylene oxyde) (PPO), les polymères poly(aryléthersulfones) (PAES), et en particulier le polyethersulfone (PES), polyphenylene ether sulfone (PPSU), les poly(arylène sulfures) (PAS) et en particulier le sulfure de polyphenylene (PPS), les polymères à cristaux liquides et leurs mélanges.

### Polymères thermoplastiques hétérocycliques

A titre de polymères thermoplastiques hétérocycliques, il est cité à titre d'exemple convenant selon l'invention le polyetherimide (PEI), des polyimides (PI), des polyamideimides (PAI) et des polybenzymidazole (PBI), ou leurs mélanges.

Avantageusement, le ou les polymère(s) thermoplastique(s) est/sont choisi(s) dans le groupe constitué de polyethersulfone (PES), polyphenylene ether sulfone (PPSU), polymères à cristaux liquides (LCP), sulfure de polyphenylene (PPS), poly(phenylene oxyde) (PPO), poly(arylene sulfure) (PAS), polyetherimide (PEI), polyimides (PI), polyamide imides (PAI), polybenzymidazole (PBI), polyarylether cétone (PAEK) dont polyether cétone (PEK), polyether ether cétone (PEEK), polyether cétone cétone (PEKK), polyether ether cétone cétone (PEEKK) et polyether cétone ether cétone cétone (PEKEKK) et leurs mélanges.

Avantageusement, la couche unique (3) comprend un ou plusieurs polymère(s) thermoplastique(s), de préférence en une proportion en poids de ladite couche entre 40 et 80 %, avantageusement entre 40 et 70 %, encore plus avantageusement entre 42 et 65 %, de manière particulièrement préférée entre 45 et 55 %.

Selon une variante, le PAEK est mis en œuvre sous forme d'une suspension et les particules de PAEK dans les suspensions de PAEK présentent une granulométrie avec un d50 d'environ 10 µm à 15 µm.

### CHARGES

Les charges au sens de l'invention permettent d'apporter du renfort mécanique et peuvent aussi apporter des propriétés d'hydrophobicité, tout en améliorant la résistance mécanique et la conductivité thermique du revêtement.

Les charges n'ont pas pour seule fonction d'apporter de la couleur au revêtement, mais peuvent y contribuer.

La présence de charges avec une excellente conductivité thermique permet de compenser la faible conductivité thermique des polymères PAEK.

Avantageusement, la couche (3) comprend une ou des charges choisie(s) dans le groupe constitué des charges céramiques (SiO₂, etc.) et/ou minérales et/ou métalliques (Al₂O₃, TiO₂, etc.) et/ou silices et/ou des particules de diamant.

Préférentiellement, la ou les charge(s) est/sont choisie(s) dans le groupe constitué des oxydes métalliques, carbures métalliques, oxy-nitrures métalliques, nitrures métalliques, et leurs mélanges.

Avantageusement, ledit métal est un métal de transition, comme l'un au moins des éléments choisis parmi B, Ni, Ti, Zr ou Hf.

De manière encore préférée, la ou les charge(s) est/sont choisie(s) dans le groupe constitué de :
- charges pour le renfort : charges dures organiques ou inorganiques ; les charges dures inorganiques sont de préférence des particules de carbures de silicium ou d'alumine ou de zircone ou de graphite, ou de céramiques, ou de carbonate, ou de l'alumine hydratée, du trihydroxyde d'aluminium ou d'un ou plusieurs oxyde(s) métallique(s), du graphite, de graphène ;
- autres charges pour le renfort choisies parmi les oxydes métalliques : silice, micas, charges lamellaires, les argiles tels que la montmorillonite, la sépiolite, la gypsite, la kaolinite et la laponite, le dioxyde de zinc, le quartz, et le phosphate de zirconium, l'alumine, zircone, l'oxyde de zinc, l'oxyde de cuivre, l'oxyde de fer ;
- charges choisies parmi les fibres de renfort : fibre de verre ou de carbone ou d'aramide ;
- charges conductrices comprenant un carbure de métal de transition et/ou un nitrure de métal de transition : caractérisé en ce que le métal de transition est l'un au moins des éléments choisis parmi B, Ni, Ti, Zr ou Hf,
   par exemple : Nitrure de Bore cubique, particules de diamant, particules métalliques ;
- charges lamellaires pouvant conférer des propriétés lubrifiantes, comme par exemple les argiles, le graphène ou le graphite.

Les charges préférées en combinaison avec les organopolysiloxanes sont :
- des charges renforçantes : silice ou carbonates avec des taux de charges de mini 10-15 %/ wt et pouvant atteindre 60 %/wt,
- alumine, alumine hydratée, trihydroxyde d'aluminium,
- silice (précipitée ou pyrrogénée) avec un d50 < 0,1µm et une surface spécifique BET > 30m2/g et de préférence comprise entre 30 et 500 m2/g,
- ou mélange de quartz et de silice, terres de diatomées ou du quartz broyé, titane, mica, talc, kaolin, sulfate de barium, chaux éteinte, oxyde de zinc, vermiculite expansée, vermiculite non expansée, carbonate de calcium etc.

De manière encore préférée, la ou les charge(s) est/sont choisie(s) dans le groupe constitué de l'alumine, le carbure de silicium, le carbure de tungstène, le nitrure de bore, le quartz, et leurs mélanges.

Avantageusement, le diamètre moyen d50 des charges est compris entre 0,1 et 50 µm, avantageusement encore entre 5 et 15 µm.

Avantageusement, la proportion de charges dans une couche est comprise entre 0,5 et 30 % en poids sec par rapport au poids total de ladite couche après cuisson, de préférence comprise entre 5 et 20 %.

Avantageusement, la proportion de charges dans la couche (3) est inférieure à 10 % en poids par rapport au poids total de ladite couche.

### Additifs

Avantageusement, lesdits additifs sont choisis dans le groupe constitué des agents anti-mousse, agents dispersants, agents mouillants, épaississants, ajusteurs de pH, huiles silicone réactives.

Le ou lesdits agent(s) anti-mousse(s) (est)sont préférentiellement choisi(s) dans le groupe constitué de huiles minérales, diols, hydrocarbures, glycérides, oxyrane, acides gras émulsionnés.

Le ou les tensioactif(s) est(sont) préférentiellement choisi(s) dans le groupe constitué d'éther de glycol, alcool éthoxylé à l'exclusion des alkyl phenol éthoxylates (APE), les tensioactifs gemini.

Le ou les agent(s) dispersant est(sont) préférentiellement choisi(s) dans le groupe constitué des dispersants anioniques comme les dérivés d'acide gras.

Lesdits épaississants sont préférentiellement choisis dans le groupe constitué de copolymère base acrylique ou base polyuréthane, cellulose, silice pyrogénée.

Lesdits ajusteurs de pH sont préférentiellement choisis dans le groupe constitué des bases de Bronsted : ammoniaque, amines (triéthyl amine, triéthanolamine...), hydroxydes (soude, potasse ...), carbonates.

Avantageusement, la couche (3) comprend un ou plusieurs additifs et la proportion d'additifs dans la couche (3) est inférieure à 20 % en poids par rapport au poids total de ladite couche.

### AGENTS COLORANTS

Avantageusement, le ou les agent(s) colorant(s) est/sont choisi(s) dans le groupe constitué de pigments thermochromes, pigments thermostables, paillettes et leurs mélanges.

### Pigments thermochromes

De préférence, le ou les pigment(s) thermochrome(s) est/sont choisis dans le groupe constitué de Bi₂O₃, Fe₂O₃, V₂O₅, WO₃, CeO₂, In₂O₃, Y_{1,84}Ca_{0,16}Ti_{1,84}V_{0,16}O_{1,84}, AgI, (Bi₁₋ₓAₓ)(V_{1-y}M_{y})O₄ avec
- x est égal à 0 ou x est compris de 0,001 à 0,999,
- y est égal à 0 ou y est compris de 0,001 à 0,999,
- A et M sont choisis dans le groupe constitué de l'azote, le phosphore, un métal alcalin, un métal alcalinoterreux, un métal de transition, un métal pauvre, un métalloïde ou un lanthanide,
- A et M sont différents l'un de l'autre.

Sachant que A et M sont différents l'un de l'autre, lorsque :
- A est un métal alcalin, il peut être choisi parmi Li, Na, K, Rb, Cs,
- M est un métal alcalin, il peut être choisi parmi Li, Na, K, Rb, Cs,
- A est un métal alcalinoterreux, il peut être choisi parmi Be, Mg, Ca, Sr, Ba,
- M est un métal alcalinoterreux, il peut être choisi parmi Be, Mg, Ca, Sr, Ba,
- A est un métal de transition, il peut être choisi parmi Sc, Ti Cr, Mn, Fe, Co, Ni, Cu, Y, Zr, Nb, Mo, Ru, Rh, Pd, Ag, Ta, W, Ir,
- M est un métal de transition, il peut être choisi parmi Sc, Ti Cr, Mn, Fe, Co, Ni, Cu, Y, Zr, Nb, Mo, Ru, Rh, Pd, Ag, Ta, W, Ir,
- A est un métal pauvre, il peut être choisi parmi Al, Zn, Ga, In, Sn,
- M est un métal pauvre, il peut être choisi parmi Al, Zn, Ga, In, Sn,
- A est un métalloïde, il peut être choisi parmi B, Si, Ge, Sb,
- M est un métalloïde, il peut être choisi parmi B, Si, Ge, Sb,
- A est un lanthanide, il peut être choisi parmi La, Ce, Pr, Nd, Pm, Sm, Eu, Gd, Tb, Dy, Ho, Er, Tm, Yb, Lu,
- M est un lanthanide, il peut être choisi parmi La, Ce, Pr, Nd, Pm, Sm, Eu, Gd, Tb, Dy, Ho, Er, Tm, Yb, Lu.

De préférence, A et M différents l'un de l'autre sont B et/ou Mg.

De préférence, le pigment (Bi₁₋ₓAₓ)(V_{1-y}M_{y})O₄ présente une forme cristallographique monoclinique scheelite à température ambiante.

De préférence, x et y valent 0, c'est-à-dire que le pigment (Bi₁₋ₓAₓ)(V_{1-y}M_{y})O₄ est le Vanadate de Bismuth (BiVO₄). Avantageusement, est utilisé un BiVO₄ de structure cristallographique monoclinique scheelite à température ambiante.

Le Vanadate de Bismuth est un composé inorganique de couleur jaune, de formule BiVO₄, largement utilisé pour ses propriétés coloristiques et pour son absence de toxicité. Enregistré dans la base de données Colour Index International en tant que Q. I. Pigment Yellow 184, il est notamment commercialisé par les sociétés Heubach (Vanadur^{®}), BASF (Sicopal^{®}), FERRO (Lysopac) ou encore Bruchsaler Farbenfabrik (Brufasol^{®}).

### Pigments thermostables

De préférence, le ou les pigment(s) thermostable(s) est/sont choisi(s) dans le groupe constitué de :
- Pigment jaune de type rutile de titane,
- Pigment jaune dérivés du bismuth, par exemple sélectionné parmi les vanadates de bismuth stabilisés (Py₁₈₄)
- Pigment rouge, par exemple sélectionné parmi rouge de pérylène (par exemple PR149, PR178 et PR224), oxyde de fer,
- Pigment orange de type oxyhalogénures de bismuth (PO₈₅),
- Pigment orange de vanadate de bismuth (PO₈₆)
- Pigment orange de zinc étain titane (PO₈₂)
- Pigment orange de sulfure de cérium (PO₇₅ ; PO₇₈)
- Pigment jaune orangé de type rutile d'antimoine titane chrome (PBr₂₄)
- Pigment jaune orangé de type rutile d'étain et de zinc (Py₂₁₆)
- Pigment jaune orangé d'oxyde de niobium sulfure étain zinc (Py₂₂₇)
- Pigment jaune orangé d'oxydes doubles d'étain et de niobium
- Co₃(PO4)₂
- LiCoPO₄
- CoAl₂O₄
- Cr₂O₃
- TiO₂
- Pigment noir PBk28 (Copper chromite black spinel)
- et leurs mélanges.

### Paillettes

Les paillettes utilisables dans le cadre de la présente invention peuvent être indépendamment choisies parmi les paillettes de mica, enrobées ou non, les paillettes de silice, enrobées ou non, les paillettes d'aluminium, enrobées ou non, les paillettes d'oxyde de fer, enrobées ou non. Les paillettes de mica ou de silice enrobées de dioxyde de titane. Les paillettes utilisables dans le cadre de la présente invention peuvent être traitées pour donner un effet de couleur particulier.

Avantageusement, le ou les paillette(s) est/sont des particules choisies dans le groupe constitué des particules de mica, d'aluminium, de mica enrobé de dioxyde de titane ou leurs mélanges.

### Paillettes hologramme

Avantageusement, le ou les paillette(s) est/sont des paillettes hologramme c'est-à-dire un mélange de particules magnétisables et de particules non magnétisables.

Les particules magnétisables peuvent être avantageusement des particules comprenant au moins un métal ferromagnétique. Ces particules magnétisables peuvent être de nature homogène, c'est-à-dire constituées du même matériau, ou de nature composite, c'est-à-dire que ces particules magnétisables ont une structure cœur-enveloppe, dans laquelle le métal ferromagnétique se trouve dans le cœur et/ou dans l'enveloppe desdites particules. A titre d'exemples de particules magnétisables composites, on peut notamment citer des paillettes de mica enrobées d'oxyde de fer Fe2O3 ou des fibres d'acier inoxydable enrobées d'un matériau sol-gel, comme protection vis-à-vis de la corrosion lors des étapes de mise en œuvre du revêtement, ou encore des paillettes en matériau plastique enrobées d'oxyde de fer Fe2O3, ou des paillettes dont le cœur est en métal ferromagnétique et l'enveloppe est formée d'un matériau plastique ou en un matériau sol-gel.

Selon un mode de réalisation, une partie desdites particules magnétisables est orientée de manière à former un décor tridimensionnel.

Avantageusement, le mélange de particules magnétisables et de particules non magnétisables représente entre 1 % et 5 % en poids du poids de la couche, de préférence entre 2 % et 3 % en poids.

Avantageusement, le pourcentage de particules non magnétisables dans le mélange de particules magnétisables et de particules non magnétisables est compris entre 15% et 40% en poids par rapport au poids total du mélange de particules magnétisables et de particules non magnétisables.

Avantageusement, les particules magnétisables présentent une dimension D50 inférieure ou égale à 23 µm.

Par le terme « D50 », on entend, au sens de la présente invention la dimension maximale que présentent 50 % des particules en nombre.

Avantageusement, les particules non magnétisables présentent une dimension D90 comprise entre 20 % et 250 % de la dimension D90 des particules magnétisables.

Par le terme « D90 », on entend, au sens de la présente invention la dimension maximale que présentent 90% des particules en nombre.

Avantageusement, les particules magnétisables et/ou les particules non magnétisables sont colorées en surface.

Avantageusement, les particules non magnétisables sont constituées de mica, d'aluminium, ou de mica enrobé de dioxyde de titane.

Avantageusement, les particules magnétisables sont constituées de fer, d'oxyde de fer, d'aluminium enrobé de fer, ou de mica enrobé de fer, le fer se présentant sous forme ferritique.

### ARCHITECTURE

Selon un mode de réalisation de l'invention, la couche (3) formant le revêtement comprend une seule couche appliquée sur le support ou substrat métallique pour obtenir un revêtement monocouche.

Selon un autre mode de réalisation de l'invention, il est envisagé que le revêtement soit réalisé par passes ou applications successives d'une couche de même formulation, le tout pour obtenir un revêtement monocouche.

Avantageusement, le revêtement selon l'invention comprend une à trois passes de la même couche, de préférence deux, appliquées sur le support.

Avantageusement, le revêtement selon l'invention comprend des couches intermédiaires, de préférence deux, qui peuvent être des couches de décor.

Avantageusement, le revêtement selon l'invention est un revêtement compatible avec la cuisson des aliments.

Avantageusement, le revêtement selon l'invention est un revêtement monocouche.

### DECORS

Selon un mode de réalisation, la ou les couche(s) de décor est(sont) continue(s) et recouvre(nt) la totalité de la couche unique (3).

Selon un autre mode de réalisation, la ou les couche(s) de décor sont discontinue(s) et ne recouvre(nt) pas la totalité de la couche unique (3) et forme(nt) au moins un décor.

Avantageusement, la ou les couche(s) de décor composent plusieurs décors, l'un (i) comprenant un ou plusieurs pigment(s) thermochrome(s) et l'autre (j) comprenant au moins une composition pigmentaire de référence de température.

Selon un mode de réalisation, chacun des deux décors (i) et (j) se présente sous forme de motifs adjacents non chevauchants. Par exemple, chaque décor est représenté par des motifs géométriques différents répartis uniformément sur toute la surface et alternés les uns par rapport aux autres.

Selon un autre mode de réalisation, les deux décors (i) et (j) sont partiellement chevauchants. Par exemple, chaque décor est représenté par des motifs géométriques différents répartis uniformément sur toute la surface et partiellement chevauchants.

De préférence, les deux décors (i) et (j) sont chevauchants, soit parce qu'un des deux décors est une couche continue et l'autre décor la recouvre sous forme de motifs, soit parce que les deux décors (i) et (j) se présentent sous forme de motifs chevauchants.

Selon un autre mode de réalisation, les décors sont appliqués directement sur le substrat métallique (2).

Le décor peut être appliqué par n'importe quelle méthode bien connue de l'homme du métier par exemple par sérigraphie ou tampographie.

### PROCEDE

L'invention concerne également un procédé de fabrication d'un élément de cuisson revêtu (1) selon l'invention comprenant les étapes successives suivantes :
i. Fourniture d'un substrat métallique (2) présentant une face (2a)
ii. Eventuellement, traitement préalable de la face (2a) dudit substrat métallique (2) destinée à être revêtue,
iii. application de la couche (3) sur la face (2a).

La couche (3) à l'étape (iii) peut être appliquée par poudrage électrostatique ou par pulvérisation spray en phase solvantée ou aqueuse ou par sérigraphie ou au rouleau ou par impression digitale.

L'application du revêtement selon l'invention par le procédé selon l'invention sur le substrat permet d'obtenir une couche de revêtement thermostable. Généralement, cette couche de revêtement est humide. Par couche humide, il est entendu au sens de la présente invention que la couche comprend tout ou partie de ses solvants.

De préférence, tout ou partie des solvants de la couche humide sont éliminés, soit naturellement soit par un traitement physique par exemple par séchage thermique, par séchage par flux d'air ou par traitement sous-vide.

De manière avantageuse, la composition de revêtement selon l'invention peut comprendre en outre au moins un solvant. Avantageusement, le solvant peut être protique. Avantageusement, le solvant peut être non toxique.

Le solvant utilisable dans la composition de revêtement selon l'invention, peut avantageusement comprendre au moins un alcool, et peut être choisi de préférence parmi l'isopropanol, le méthanol, l'éthanol et leurs mélanges.

Selon une variante du procédé selon l'invention, l'application du revêtement peut se faire en plusieurs couches. Dans ce cas, le dépôt sur au moins une des deux faces opposées dudit substrat d'au moins une couche d'une composition du revêtement selon l'invention est répétée plusieurs fois. De préférence selon cette variante, une étape de séchage est réalisée entre l'application de chaque couche, puis la cuisson dudit substrat revêtu est réalisée après application de la dernière couche.

La formule de revêtement à enduire est généralement sous forme aqueuse, les polymères de la phase polymérique étant sous forme de suspensions. D'autres solvants non aqueux peuvent également convenir.

Avantageusement, le procédé de fabrication d'un élément de cuisson revêtu (1) selon l'invention comprend une étape ou plusieurs étapes de séchage entre 80 et 150°C après application de chacune des couches. Le séchage peut être réalisé par convection ou infrarouge.

L'application du revêtement selon l'invention par le procédé selon l'invention peut se faire sur le substrat à plat ou bien sur le substrat en forme ou bien sur une zone localement plate du substrat en forme. Il est obtenu une couche de revêtement thermostable. Généralement, cette couche de revêtement est humide.

Avantageusement, le procédé de fabrication d'un élément de cuisson revêtu (1) selon l'invention comprend une étape de mise en forme dudit support (2) avant ou après l'étape iii. ou après l'étape iv. de cuisson. La mise en forme est également appelée emboutissage.

Lorsque l'étape de mise en forme précède l'application iii du revêtement, l'enduction est préférentiellement réalisée par pulvérisation.

Lorsque cette étape de mise en forme est subséquente à l'application iii du revêtement, l'enduction est préférentiellement réalisée par sérigraphie ou par rouleau.

Le procédé selon l'invention comprend avantageusement une étape iv. de cuisson de l'élément obtenu à l'étape iii. du procédé. Par cuisson du substrat revêtu, on entend, au sens de la présente invention, un traitement thermique qui permet de densifier la ou les couches de revêtement appliquées sur le substrat, mais également de réticuler les précurseurs organopolysiloxanes (résine silicone).

Avantageusement, un procédé de fabrication d'un élément de cuisson revêtu
(1) comprend les étapes successives suivantes :
   i. Fourniture d'un substrat métallique (2) présentant une face (2a)
   ii. Eventuellement, traitement préalable de la face (2a) dudit substrat métallique (2) destinée à être revêtue,
   iii. application de la couche (3) sur la face (2a) ;
   iv. cuisson de l'élément obtenu à l'étape iii.

A l'étape iv., la cuisson est réalisée. Généralement la température de cuisson de l'étape iv. est comprise de 230°C à 420°C.

Avantageusement, le procédé de fabrication d'un élément de cuisson revêtu (1) selon l'invention comprend une unique étape de cuisson iv. finale de l'ensemble des couches appliquées. Cette seule étape de cuisson est réalisée simultanément pour l'ensemble des couches appliquées. Ce mode de réalisation permet de filmifier, fusionner et réticuler l'ensemble des couches entre elles pour qu'elles n'en forment plus qu'une. Le revêtement (3) forme ainsi une couche unique, même si cette couche unique peut ne pas être homogène, c'est-à-dire qu'elle peut présenter une hétérogénéité de composition comme par exemple un gradient de concentration de ses constituants.

### ARTICLE

L'invention concerne également un article culinaire (100) comprenant un élément de cuisson revêtu (1) selon l'une des revendications 1 à 9.

Selon un mode de réalisation, l'article culinaire (100) comporte une face de chauffe (6) destinée à être mise en contact avec une source de chauffage extérieure, la face de chauffe (6) étant opposée à la face de cuisson (5) destinée à être mise en contact avec les aliments lors de la cuisson.

Avantageusement, l'article culinaire (100) selon l'invention est choisi dans le groupe constitué de casserole, poêle, poêlons ou caquelons pour fondue ou raclette, fait-tout, wok, sauteuse, crêpière, grill, plancha, marmite, cocotte, cuve de cuiseur ou de machine à pain, moule culinaire.

L'invention concerne également un appareil électrique de cuisson (200) comportant un élément de cuisson revêtu (1) selon l'invention et une source de chauffage (210) configurée pour chauffer ledit élément de cuisson revêtu (1).

Avantageusement, l'appareil électrique de cuisson (200) est choisi dans le groupe constitué de crêpière électrique, appareil électrique à raclette, appareil électrique à fondue, grill électrique, plancha électrique, cuiseur électrique, machine à pain, appareil électrique de cuisson sous pression, les gaufriers, les cuiseurs à riz et les confituriers.

L'article culinaire selon la présente invention peut notamment être un article culinaire dont l'une des deux faces opposées du substrat est une face intérieure, éventuellement concave, destinée à être disposée du côté d'aliments susceptibles d'être introduits dans ou sur ledit article, et dont l'autre face du substrat est une face extérieure, éventuellement convexe, destinée à être disposée vers une source de chaleur.

A titre d'exemples non limitatifs d'articles culinaires conformes à la présente invention, on citera notamment des articles culinaires tels que les casseroles et les poêles, les woks et les sauteuses, les fait-tout et les marmites, les crêpières, les moules et plaques pour la pâtisserie, les plaques et grilles de barbecue, les bols de préparation.

### EXEMPLES

On comprendra mieux les buts, aspects et avantages de la présente invention, d'après la description donnée ci-après d'un mode particulier de réalisation de l'invention présenté à titre d'exemple non limitatif.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

### 1) Matières premières :

### Substrat métallique :

Les disques aluminium sont un alliage 4006 à l'état recuit, d'épaisseur 3,4 mm et diamètre 340 mm. Ils ont été traités par brossage (rugosité Ra environ 2 µm).

### Résines silicones :

- RS1 : Résine organopolysiloxane Méthyl fonctionnalisée éthoxy en émulsion aqueuse, Viscosité à 25 °C Approx. 1500 mPas, Taux de solide = 52 %
- RS2 : Résine organopolysiloxane copolyester fonctionnalisée éthoxy (organopolysiloxane 80 % /20 % polyester), en phase solvant, Viscosité à 25 °C Approx. 2000 mPas, Taux de solide = 75 %
- PDMS_1 : Résine polydiméthylsiloxane (PDMS) en émulsion aqueuse PDMS fonctionalisé, Taux de solide 62 %
- PDMS_2 : Résine polydiméthylsiloxane (PDMS) :
   PDMS linéaire fonctionnalisé avec bouts de chaînes terminaux [silanols en position -α,w], Viscosité à 25 °C Approx. 600 mPa.s, Taux de solide 100 %

### Polyarylether cétone :

- une dispersion aqueuse de PEEK (Poly éther éther cétone) de VICTREX sous le nom de VICOTE Coatings F804 « Vicote F804 » : taille de particule d50= 10 µm ; extrait sec 35 %; pH entre 9,6 et 11,9 ; viscosité d'environ 11 sec DIN Cup n°6.
- Résine poudre PEKK, KEPSAN 7002 PT de Arkema avec un d50 de 20 µm

### Polymères thermoplastiques aromatiques :

- Résine poudre PolyEtherSulfone (PES), grade micronisé VERADEL 3100 UFP de chez SOLVAY, poudre polymère avec un d50 < 40 µm

### Charges de renfort :

- Aerosil R972 (Evonik)
   Fumée de silice post traitée diméthyle dichlorosilane, surface spécifique (BET) = 90 à 130 m²/g
- LEVASIL CC301 : silice colloïdale en phase aqueuse avec un extrait sec de 30%
- Alumine : Alumine CAHPF 240 d50 = 45-50 µm de Alteo à 100 %

### Pigments :

- Sicopal black K0098FK (Sun Chemical) : poudre d'oxyde de Chrome/Fer : Index = P.BR.29

### Solvant Alcool

- Acétate de 2-méthoxy-1-méthyléthyle (MPA)
- Butyl Glycol acétate (BGA)
- Butyl acétate (BA)

### Additifs

### Agent anti-mousse

- moussex 7114HL de chez Synthon

### Autres additifs :

### Résine acrylique

- MODAREZ SD15 de chez Synthon avec un extrait sec de 30% en phase aqueuse

### Principe de fonctionnement du broyeur en jarre (broyage mécanique)

Le broyage à billes consiste à charger une jarre avec l'échantillon à broyer et des billes dites de broyage et à faire tourner la jarre autour de son axe à une certaine vitesse. La rotation de la jarre s'effectue généralement à l'aide d'une machine à rouleaux. L'échantillon peut être broyé sous forme sèche ou dispersée dans un solvant approprié (par ex. dans l'eau ou dans l'alcool). La dispersion peut également contenir certains adjuvants (comme un dispersant ou un anti-mousse).

Le diamètre moyen des billes de broyage doit être adapté à la dimension des particules à broyer. Plus les particules sont fines, plus le diamètre des billes à utiliser sera petit. Le volume total de billes, y compris les vides entre les billes, représentera environ 50-60 % du volume intérieur de la jarre. Les billes de tailles différentes sont avantageusement réparties selon la proportion pondérale suivante par rapport au poids total des billes : 25 % de petites billes, 50 % de billes moyennes et 25 % de grosses billes. La dimension des billes les plus petites est comprise entre 2 et 10 mm. L'alumine et la zircone stabilisée sont couramment utilisées comme matériau des billes.

### 2) Exemples de réalisation d'article culinaire selon l'invention :

L'enduction est effectuée à plat sur disques aluminium plat. Les disques aluminium sont un alliage 4006 à l'état recuit, d'épaisseur 3,4 mm et diamètre 340 mm. Ils ont été traités par brossage (rugosité Ra environ 2 µm).

Sur ce disque en aluminium est déposée par sérigraphie une couche continue unique (3) selon l'invention choisie parmi les compositions de couche telles que décrites ci-dessous (couches des exemples 1 à 6 selon l'invention et couches des contre-exemples 1 et 2 hors invention).

L'enduction par sérigraphie est réalisée selon les paramètres suivants :
- entre 1 et 4 passes, préférentiellement 2 ou 3 d'application ;
- un séchage partiel peut être envisagé entre chaque passe avant enduction de la suivante ;
- la cuisson finale est réalisée dans un four entre 230 et 420°C pendant 10 à 30 minutes, puis les disques sont laissés à refroidir ;
- l'épaisseur obtenue est entre 20 et 50 µm, préférentiellement entre 30 et 40 µm.

Les disques enduits sont emboutis pour former des poeles de 26 cm de diamètre intérieur.

La composition aqueuse de la couche unique (3) du revêtement est préparée selon le principe du broyage à billes. Le broyage à billes s'effectue en jarre comme décrit ci-dessus.La dispersion peut également contenir certains adjuvants (comme un dispersant ou un anti-mousse).

| EXEMPLE 1 | % en phase solide après cuisson dans le revêtement | Thermoplastiques Ratio PEAK / Résine silicone | Charges % en phase solide après cuisson dans le revêtement |
|---|---|---|---|
| RS1 | 52,5 % | PEEK / RS1 : 44 /56 | |
| PEEK | 41,2 % | | |
| Aerosil R972 | 4,2 % | | Charges : 4 % |
| Sicopal K0098FK | 1,7 % | | |
| Moussex 7114HL | 0,4 % | | |
| BASE SEC | 100,0 % | | |

| | Masse en humide (gr) Composition du liquide | Extrait sec (%) de la Composition liquide |
|---|---|---|
| RS1 | 43,7 | 52% |
| Aerosil R972 | 1,8 | |
| Butyle acétate (BA) | 1,1 | |
| Eau | 1,5 | |
| Moussex 7114HL | 0,2 | |
| Sicopal K0098FK | 0,7 | |
| PEEK dispersion : F804 | 51,0 | 35% |
| TOTAL | 100 | 43% |

| EXEMPLE 2 | % en phase solide après cuisson dans le revêtement | Thermoplastiques Ratio PEAK / Résine silicone | Charges % en phase solide après cuisson dans le revêtement |
|---|---|---|---|
| RS1 | 48,8 % | PEEK / (RS1+PDMS_1) : 44 / 56 | |
| PDMS_1 | 2,6 % | | |
| PEEK | 41,0 % | | |
| Aerosil R972 | 4,7 % | | Charges : 5% |
| Sicopal K0098FK | 2,3 % | | |
| Moussex 7114HL | 0,6 % | | |
| BASE SEC | 100,0 % | | |

| | Masse en humide (gr) Composition du liquide | Extrait sec (%) de la Composition liquide |
|---|---|---|
| RS1 | 40,6 | 52 % |
| PDMS1 | 1,8 | 62 % |
| Aerosil R972 | 2,0 | |
| Butyle acétate (BA) | 1,5 | |
| Eau | 2,0 | |
| Moussex 7114HL | 0,3 | |
| Sicopal K0098FK | 1,0 | |
| PEEK dispersion : F804 | 50,8 | 0,35 % |
| TOTAL | 100,0 | 43 % |

| EXEMPLE 3 | % en phase solide après cuisson dans le revêtement | Thermoplastiques Ration PEAK / Résine silicone | Charges % en phase solide après cuisson dans le revêtement |
|---|---|---|---|
| RS1 | 52,5 % | PEKK / RS1 : 44 /56 | |
| PEKK | 41,2 % | | |
| Aerosil R972 | 4,2 % | | Charges : 4 % |
| Sicopal K0098FK | 1,7 % | | |
| Moussex 7114HL | 0,4 % | | |
| BASE SEC | 100,0 % | | |

| | Masse en humide (gr) Composition du liquide | Extrait sec (%) de la Composition liquide |
|---|---|---|
| RS1 | 43,5 | 52 % |
| Aerosil R972 | 1,8 | |
| Butyle acétate (BA) | 1,1 | |
| Eau | 34,8 | |
| Moussex 7114HL | 0,2 | |
| Sicopal K0098FK | 0,7 | |
| PEKK : KEPSAN 7002 PT | 17,9 | 100 % |
| TOTAL | 100 | 43 % |

| EXEMPLE 4 | % en phase solide après cuisson dans le revêtement | Thermoplastiques Ration PEAK / Résine silicone | Charges % en phase solide après cuisson dans le revêtement |
|---|---|---|---|
| RS2 | 52,5 % | PEEK / RS2 : 44 /56 | |
| PEEK | 41,2 % | | |
| Aerosil R972 | 4,2 % | | Charges : 4 % |
| Sicopal K0098FK | 1,7 % | | |
| Moussex 7114HL | 0,4 % | | |
| BASE SEC | 100,0 % | | |

| | Masse en humide (gr) Composition du liquide | Extrait sec (%) de la Composition liquide |
|---|---|---|
| RS2 | 29,6 | 75 % |
| Aerosil R972 | 1,8 | |
| Butyle acétate (BA) | 16,8 | |
| Eau | 1,2 | |
| Moussex 7114HL | 0,2 | |
| Sicopal K0098FK | 0,7 | |
| PEEK dispersion : F804 | 49,8 | 35 % |
| TOTAL | 100 | 42 % |

| EXEMPLE 5 | % en phase solide après cuisson dans le revêtement | Thermoplastiques Ratio PEAK / Résine silicone | Charges % en phase solide après cuisson dans le revêtement |
|---|---|---|---|
| RS1 | 49,2 % | PEEK / (RS1+PDMS_1) : 44 / 56 | |
| PDMS_2 | 2,6 % | | |
| PEEK | 41,4 % | | |
| Aerosil R972 | 5,9 % | | Charges : 6 % |
| Sikkopal K0098FK | 0,9 % | | |
| Moussex 7114HL | 0,0 % | | |
| BASE SEC | 100,0 % | | |

| | Masse en humide (gr) Composition du liquide | Extrait sec (%) de la Composition liquide |
|---|---|---|
| RS1 | 40,4 | 52 % |
| PDMS2 | 1,8 | 62 % |
| Aerosil R972 | 2,5 | |
| Butyle acétate (BA) | 1,2 | |
| Eau | 3,4 | |
| Moussex 7114HL | 0,0 | |
| Sikkopal K0098FK | 0,4 | |
| PEEK dispersion : F804 | 50,4 | 35 % |
| TOTAL | 100,0 | 43 % |

| EXEMPLE 6 | % en phase solide après cuisson dans le revêtement | Thermoplastiques Ratio (PEAK + PAES) / Résine silicone | Charges % en phase solide après cuisson dans le revêtement |
|---|---|---|---|
| RS1 | 51,1 % | | |
| PEEK | 20,9 % | TP = 43 % (PEEK + PES) / RS1 : 48 /52 | |
| VERADEL 3100 UFP | 22,5 % | | |
| Aerosil R972 | 3,7 % | | Charges : 4 % |
| Sikkopal K0098FK | 0,8 % | | |
| Moussex 7114HL | 1,0 % | | |
| BASE SEC | 100,0 % | | |

| | Masse en humide (gr) Composition du liquide | Extrait sec (%) de la Composition liquide |
|---|---|---|
| RS1 | 42,1 | 52 % |
| Aerosil R972 | 1,6 | |
| Butyle acétate (BA) | 1,0 | |
| Eau | 19,3 | |
| Moussex 7114HL | 0,4 | |
| Sikkopal K0098FK | 0,3 | |
| VERADEL 3100 UFP | 9,7 | 100 % |
| PEEK dispersion : F804 | 25,6 | 35 % |
| TOTAL | 100,0 | 43 % |

| CONTRE-EXEMPLE 1 | % en phase solide après cuisson dans le revêtement | Thermoplastiques Ratio PEAK / Résine silicone | Charges % en phase solide après cuisson dans le revêtement |
|---|---|---|---|
| RS1 | 18,3 % | PEEK / RS1 : 64 /36 | |
| PEEK | 32,8 % | | |
| Aerosil R972 | 23,4 % | | Charges : 47% |
| Alumine | 23,4 % | | |
| Sikkopal K0098FK | 1,7 % | | |
| Moussex 7114HL | 0,4 % | | |
| BASE SEC | 100,0 % | | |

| | Masse en humide (gr) Composition du liquide | Extrait sec (%) de la Composition liquide |
|---|---|---|
| RS1 | 15,5 | 52 % |
| Aerosil R972 | 10,3 | |
| Alumine CAHPF 240 | 10,3 | |
| Butyle acétate (BA) | 1,1 | |
| Eau | 20,6 | |
| Moussex 7114HL | 0,2 | |
| Sikkopal K0098FK | 0,8 | |
| PEEK dispersion : F804 | 41,2 | 35 % |
| TOTAL | 100,0 | 44 % |

| CONTRE-EXEMPLE 2 | % en phase solide après cuisson dans le revêtement | Thermoplastiques Ratio PEAK / Résine silicone | Charges % en phase solide après cuisson dans le revêtement |
|---|---|---|---|
| PEEK | 80,6 % | PEEK : 100 % | |
| Levasil CC301 | 9,3 % | | Charges : 9 % |
| Sikkopal K0098FK | 2,4 % | | |
| Modarez SD 15 | 7,7 % | | |
| BASE SEC | 100,0 % | | |

| | Masse en humide (gr) Composition du liquide | Extrait sec (%) de la Composition liquide |
|---|---|---|
| Levasil CC301 | 9,5 | 30 % |
| MPG | 9,5 | |
| Eau | 2,2 | |
| Modarez SD 15 | 7,6 | 31 % |
| Sikkopal K0098FK | 0,7 | |
| PEEK dispersion : F804 | 70,5 | 35 % |
| TOTAL | 100,0 | 31 % |

### Méthode d'évaluation des propriétés du revêtement antiadhésif : PERFORMANCE TEST à L'ŒUF

La méthode d'évaluation des propriétés du revêtement antiadhésif est réalisée à partir du test à l'œuf adapté de la norme AFNOR NF D 21-511 paragraphe 3.3.2, et mis en œuvre de la manière suivante :
On nettoie l'échantillon, puis on essuie l'eau restée sur la surface.

La surface intérieure du corps de récipient est préalablement séchée.

On chauffe le récipient de cuisson sur une gazinière à une température comprise entre 140 et 170°C.

On casse un œuf de calibre 60/65 que l'on verse au centre sur le récipient de cuisson chaud et on attend que l'œuf ait coagulé (6 à 9 minutes) ; on retire l'œuf du récipient de cuisson à l'aide d'une spatule, on nettoie le revêtement à l'aide d'une éponge végétale humide et on évalue au travers de cette action les propriétés antiadhésives du récipient de cuisson, puis on les consigne :
Note de 100 : l'œuf s'enlève entièrement à l'aide d'une spatule plastique ;
Note de 75 : l'œuf ne s'enlève pas entièrement mais le revêtement est facilement nettoyé par une éponge humide,
Note de 50 : l'œuf ne s'enlève pas entièrement mais le revêtement est nettoyable par une éponge humide,
Note de 25 : l'œuf ne s'enlève pas entièrement et le revêtement n'est pas nettoyé par une éponge humide,
Note de 0 : l'œuf ne s'enlève pas et le revêtement ne peut pas être nettoyé par une éponge humide.

| **Exemples** | **Test à l'œuf** |
|---|---|
| 1 | 100 |
| 2 | 100 |
| 3 | 100 |
| 4 | 75 |
| 5 | 100 |
| 6 | 75 |
| Contre-exemple 1 | 25 |
| Contre-exemple 2 | 0 |

## Revendications

1. Elément de cuisson revêtu (1) pour article culinaire ou appareil électrique de cuisson, comportant un substrat métallique (2) revêtu sur au moins une face (2a) par une couche unique (3) en contact par une de ses faces (3a) avec le substrat métallique (2), laquelle couche (3) est constituée d'au moins 40% en poids d'un ou plusieurs polymère(s) thermoplastique(s), d'une ou plusieurs résine(s) silicone et éventuellement d'une ou plusieurs charge(s) et/ou d'un ou plusieurs additif(s) et/ou d'un ou plusieurs agent(s) colorant(s), l'élément de cuisson (1) étant **caractérisé en ce que**
- l'une des faces (3b) de la couche (3) forme une face de cuisson (5),
- la couche (3) est dépourvue de polymère fluoré et
- l'épaisseur de la couche (3) est comprise entre 10 µm et 100 µm.

2. Elément de cuisson revêtu (1) selon la revendication 1 **caractérisé en ce que** la ou les résine(s) silicone est/sont choisie(s) dans le groupe constitué de résines méthyl silicones et/ou phényl silicones et/ou méthyl-phényl-silicones, résine méthyl silicone-polyester (copolymères), résine phényl silicone-polyester (copolymères), résine méthyl-phényl silicone-polyester (copolymères), résine silicone-alkyde (copolymères), résine silicone modifiée et leurs mélanges.

3. Elément de cuisson revêtu (1) selon la revendication 1 ou 2 **caractérisé en ce que** la couche (3) comprend une ou des charge(s) choisie(s) dans le groupe constitué de charges céramiques et/ou minérales et/ou métalliques et/ou silices et/ou particules de diamant.

4. Elément de cuisson revêtu (1) selon l'une quelconque des revendications précédentes **caractérisé en ce que** le ou les polymère(s) thermoplastique(s) est/sont choisi(s) dans le groupe constitué de polyethersulfone (PES), polyphenylene ether sulfone (PPSU), polymères à cristaux liquides (LCP), sulfure de polyphenylene (PPS), poly(phenylene oxyde) (PPO), poly(arylene sulfure) (PAS), polyétherimide (PEI), polyimides (PI), polyamide imides (PAI), polybenzymidazole (PBI), polyarylether cétone (PAEK) dont polyether cétone (PEK), polyether ether cétone (PEEK), polyether cétone cétone (PEKK), polyether ether cétone cétone (PEEKK) et polyether cétone ether cétone cétone (PEKEKK) et leurs mélanges.

5. Elément de cuisson revêtu (1) selon l'une quelconque des revendications précédentes **caractérisé en ce que** ledit substrat métallique (2) est un substrat en aluminium, en acier inoxydable, en fonte de fer ou d'aluminium, en fer, en titane ou en cuivre.

6. Elément de cuisson revêtu (1) selon l'une quelconque des revendications précédentes, **caractérisé en ce que** l'épaisseur de la couche (3) est comprise entre 20 µm et 85 µm, de manière particulièrement préférée entre 30 µm et 70 µm.

7. Elément de cuisson revêtu (1) selon l'une quelconque des revendications précédentes **caractérisé en ce que** la proportion de résine silicone dans la couche (3) est supérieure ou égale à 20 %, de préférence supérieure ou égale à 40 %, encore plus préférentiellement supérieure ou égale à 50 %, en poids par rapport au poids total de la couche (3).

8. Elément de cuisson revêtu (1) selon l'une quelconque des revendications précédentes **caractérisé en ce que** la proportion de charges, lorsqu'elle(s) est/sont présente(s), dans la couche (3) est inférieure à 10 % en poids par rapport au poids total de la couche (3).

9. Elément de cuisson revêtu (1) selon l'une quelconque des revendications précédentes **caractérisé en ce que** la couche (3) comprend un ou plusieurs additifs et que la proportion d'additifs dans la couche (3) est inférieure à 20 % en poids par rapport au poids total de la couche (3).

10. Procédé de fabrication d'un élément de cuisson revêtu (1) selon l'une quelconque des revendications précédentes comprenant les étapes successives suivantes :
i. Fourniture d'un substrat métallique (2) présentant une face (2a)
ii. Eventuellement, traitement préalable de la face (2a) dudit substrat métallique (2) destinée à être revêtue,
iii. application de la couche (3) sur la face (2a).

11. Article culinaire (100) comprenant un élément de cuisson revêtu (1) selon l'une quelconque des revendications 1 à 9.

12. Article culinaire (100) selon la revendication 11 **caractérisé en ce qu'**il comporte une face de chauffe (6) destinée à être mise en contact avec une source de chauffage extérieure, la face de chauffe (6) étant opposée à la face de cuisson (5) destinée à être mise en contact avec les aliments lors de la cuisson.

13. Article culinaire (100) selon l'une des revendications 11 ou 12 choisi dans le groupe constitué de casserole, poêle, poêlons ou caquelons pour fondue ou raclette, fait-tout, wok, sauteuse, crêpière, grill, plancha, marmite, cocotte, cuve de cuiseur ou de machine à pain, moule culinaire.

14. Appareil électrique de cuisson (200) comportant un élément de cuisson revêtu (1) et une source de chauffage (210) configurée pour chauffer ledit élément de cuisson revêtu (1), **caractérisé en ce que** ledit élément de cuisson revêtu (1) est selon l'une quelconque des revendications 1 à 9.

15. Appareil électrique de cuisson (200) selon la revendication 14, choisi dans le groupe constitué de crêpière électrique, appareil électrique à raclette, appareil électrique à fondue, grill électrique, plancha électrique, cuiseur électrique, machine à pain, appareil électrique de cuisson sous pression, les gaufriers, les cuiseurs à riz et les confituriers.

## Patentansprüche

1. Beschichtetes Kochelement (1) für Küchenartikel oder elektrische Kochgeräte, umfassend ein metallisches Substrat (2), das auf mindestens einer Seite (2a) mit einer einzelnen Schicht (3) beschichtet ist, die mit einer ihrer Seiten (3a) mit dem metallischen Substrat (2) in Kontakt steht, wobei diese Schicht (3) zu mindestens 40 Gew.-% aus einem oder mehreren thermoplastischen Polymeren, einem oder mehreren Silikonharzen und gegebenenfalls einem oder mehreren Füllstoffen und/oder einem oder mehreren Additiven und/oder einem oder mehreren Farbstoffen besteht, wobei das Kochelement (1) **dadurch gekennzeichnet ist, dass**
- eine Seite (3b) der Schicht (3) eine Kochfläche (5) bildet,
- die Schicht (3) frei von fluoriertem Polymer ist und
- die Dicke der Schicht (3) zwischen 10 µm und 100 µm liegt.

2. Beschichtetes Kochelement (1) nach Anspruch 1 **dadurch gekennzeichnet, dass** das/die Silikonharz(e) ausgewählt ist/sind aus der Gruppe bestehend aus Methylsilikonharze und/oder Phenylsilikonharze und/oder Methylphenylsilikonharze, Methylsilikon-Polyesterharz (Copolymeren), Phenylsilikon-Polyesterharz (Copolymeren), Methylphenylsilikon-Polyesterharz (Copolymeren), Silikonalkydharz (Copolymeren), modifiziertem Silikonharz und Mischungen davon.

3. Beschichtetes Kochelement (1) nach Anspruch 1 oder 2, **dadurch gekennzeichnet, dass** die Schicht (3) einen oder mehrere Füllstoffe umfasst, die aus der Gruppe bestehend aus keramischen und/oder mineralischen und/oder metallischen Füllstoffen und/oder Silica und/oder Diamantpartikeln ausgewählt sind.

4. Beschichtetes Kochelement (1) nach einem der vorhergehenden Ansprüche **dadurch gekennzeichnet, dass** das/die thermoplastische(n) Polymer(e) ausgewählt ist/sind aus der Gruppe bestehend aus Polyethersulfon (PES), Polyphenylenethersulfon (PPSU), Flüssigkristallpolymeren (LCP), Polyphenylensulfid (PPS), Poly(phenylenoxid) (PPO), Poly(arylensulfid) (PAS), Polyetherimid (PEI), Polyimiden (PI), Polyamidimiden (PAI), Polybenzymidazol (PBI), Polyaryletherketon (PAEK) einschließlich Polyetherketon (PEK), Polyetheretherketon (PEEK), Polyetherketonketon (PEKK), Polyetheretherketonketon (PEEKK) und Polyetherketonetherketonketon (PEKEKK) und Mischungen davon.

5. Beschichtetes Kochelement (1) nach einem der vorhergehenden Ansprüche **dadurch gekennzeichnet, dass** das metallische Substrat (2) ein Substrat aus Aluminium, Edelstahl, Eisen- oder Aluminiumguss, Eisen, Titan oder Kupfer ist.

6. Beschichtetes Kochelement (1) nach einem der vorhergehenden Ansprüche, **dadurch gekennzeichnet, dass** die Dicke der Schicht (3) zwischen 20 µm und 85 µm, besonders bevorzugt zwischen 30 µm und 70 µm liegt.

7. Beschichtetes Kochelement (1) nach einem der vorhergehenden Ansprüche **dadurch gekennzeichnet, dass** der Anteil an Silikonharz in der Schicht (3) größer oder gleich 20 %, vorzugsweise größer oder gleich 40 %, noch bevorzugter größer oder gleich 50 %, bezogen auf das Gesamtgewicht der Schicht (3), ist.

8. Beschichtetes Kochelement (1) nach einem der vorhergehenden Ansprüche **dadurch gekennzeichnet, dass** der Anteil an Füllstoffen, falls vorhanden, in der Schicht (3) weniger als 10 Gew.-% bezogen auf das Gesamtgewicht der Schicht (3) beträgt.

9. Beschichtetes Kochelement (1) nach einem der vorhergehenden Ansprüche **dadurch gekennzeichnet, dass** die Schicht (3) einen oder mehrere Zusatzstoffe enthält und der Anteil an Zusatzstoffen in der Schicht (3) weniger als 20 Gew.-% bezogen auf das Gesamtgewicht der Schicht (3) beträgt.

10. Verfahren zur Herstellung eines beschichteten Kochelements (1) nach einem der vorhergehenden Ansprüche, umfassend die folgenden aufeinanderfolgenden Schritte:
i. Bereitstellen eines metallischen Substrats (2) mit einer Seite (2a)
ii. Optional: Vorbehandlung der zu beschichtenden Seite (2a) des metallischen Substrats (2);
iii. Aufbringen der Schicht (3) auf die Seite (2a).

11. Küchenartikel (100) mit einem beschichteten Kochelement (1) nach einem der Ansprüche 1 bis 9.

12. Küchenartikel (100) nach Anspruch 11 **dadurch gekennzeichnet, dass** er eine Heizfläche (6) aufweist, die dazu bestimmt ist, mit einer externen Heizquelle in Kontakt gebracht zu werden, wobei die Heizfläche (6) der Kochfläche (5) gegenüberliegt, die dazu bestimmt ist, während des Garvorgangs mit dem Gargut in Kontakt gebracht zu werden.

13. Küchenartikel (100) nach einem der Ansprüche 11 oder 12, ausgewählt aus der Gruppe bestehend aus Stielkasserolle, Bratpfanne, Fondue- oder Raclettepfanne, Mehrzwecktopf, Wok, Sautépfanne, Crêpepfanne, Grill, Plancha, Topf, Schmortopf, Einsatz eines Kochgeräts oder Brotbackautomaten, Kochform.

14. Elektrisches Kochgerät (200) mit einem beschichteten Kochelement (1) und einer Heizquelle (210) zum Erhitzen des beschichteten Kochelements (1), **dadurch gekennzeichnet, dass** das beschichtete Kochelement (1) einem der Ansprüche 1 bis 9 entspricht.

15. Elektrisches Kochgerät (200) nach Anspruch 14, ausgewählt aus der Gruppe bestehend aus elektrischem Crêpe-Maker, elektrischem Raclette-Gerät, elektrischem Fondue-Gerät, elektrischem Grill, elektrischer Grillplatte, elektrischem Kocher, Brotbackautomat, elektrischem Schnellkochgerät, Waffeleisen, Reiskochern und Marmeladenkochern.

## Claims

1. A coated cooking element (1) for a culinary item or an electric cooking appliance, comprising a metal substrate (2) coated on at least one face (2a) with a single layer (3) in contact via one of its faces (3a) with the metal substrate (2), said layer (3) being constituted of at least 40% by weight of one or more thermoplastic polymer(s), of one or more silicone resin(s) and optionally of one or more filler(s) and/or of one or more additive(s) and/or of one or more coloring agent(s), the cooking element (1) being **characterized in that**
- one of its faces (3b) forms a cooking face (5),
- the layer (3) is free from fluorinated polymer and
- the thickness of the layer (3) is comprised between 10 and 100 µm.

2. The coated cooking element (1) according to claim 1, **characterized in that** the silicone resin(s) is/are chosen from the group constituted of methyl silicone resins and/or phenyl silicone resins and/or methyl phenyl silicone resins, methyl silicone-polyester resin (copolymers), phenyl silicone-polyester resin (copolymers), methyl phenyl silicone-polyester resin (copolymers), silicone-alkyd resin (copolymers), modified silicone resin and mixtures thereof.

3. The coated cooking element (1) according to claim 1 or 2, **characterized in that** the layer (3) comprises one or more filler(s) chosen from the group constituted of ceramic and/or mineral and/or metallic fillers and/or silicas and/or diamond particles.

4. The coated cooking element (1) according to any one of the preceding claims, **characterized in that** the thermoplastic polymer(s) is/are chosen from the group constituted of polyethersulfone (PES), polyphenylene ether sulfone (PPSU), liquid crystal polymers (LCP), polyphenylene sulfide (PPS), poly(phenylene oxide) (PPO), poly(arylenesulfide) (PAS), polyetherimide (PEI), polyimides (PI), polyamide-imides (PAI), polybenzimidazole (PBI), polyaryletherketone (PAEK) including polyetherketone (PEK), polyetheretherketone (PEEK), polyetherketoneketone (PEKK), polyetheretherketoneketone (PEEKK), polyetherketoneetherketoneketone (PEKEKK) and mixtures thereof.

5. The coated cooking element (1) according to any one of the preceding claims **characterized in that** said metal substrate (2) is an aluminum, stainless-steel, cast iron or cast aluminum, iron, titanium or copper substrate.

6. The coated cooking element (1) according to any one of the preceding claims, **characterized in that** the thickness of the layer (3) is comprised between 20 µm and 85 µm, particularly preferably between 30 and 70 µm.

7. The coated cooking element (1) according to any one of the preceding claims, **characterized in that** the proportion of silicone resin in the layer (3) is greater than or equal to 20%, preferably greater than or equal to 40%, even more preferentially greater than or equal to 50%, by weight with regard to the total weight of the layer (3).

8. The coated cooking element (1) according to any one of the preceding claims, **characterized in that** the proportion of fillers, when present, in the layer (3) is less than 10% by weight with regard to the total weight of the layer (3).

9. The coated cooking element (1) according to any one of the preceding claims, **characterized in that** the layer (3) comprises one or more additives and the proportion of additives in the layer (3) is less than 20% by weight with regard to the total weight of the layer (3).

10. A method of manufacturing a coated cooking element (1) according to any one of the preceding claims comprising the following successive steps:
i. Supplying a metal substrate (2) having a face (2a);
ii. Optionally, pre-treating the face (2a) of said metal substrate (2) intended to be coated;
iii. Applying the layer (3) on the face (2a).

11. A culinary item (100) comprising a coated cooking element (1) according to any one of claims 1 to 9.

12. The culinary item (100) according to claim 11, **characterized in that** it has a heating face (6) intended to be brought into contact with an external heating source, the heating face (6) being opposite the cooking face (5) intended to be brought into contact with the food during cooking.

13. The culinary item (100) according to one of claim 11 or claim 12 chosen from the group constituted of saucepan, frying pan, skillet, fondue or raclette dishes/pans, Dutch oven, wok, sauté pan, crepe maker, grill, griddle, marmite, cocotte, cooker or bread maker insert, culinary mold.

14. An electric cooking appliance (200) having a coated cooking element (1) and a heating source (210) configured to heat said coated cooking element (1), **characterized in that** said coated cooking element (1) is according to any one of claims 1 to 9.

15. The electric cooking appliance (200) according to claim 14, chosen from the group constituted of electric crepe maker, electric raclette appliance, electric fondue appliance, electric grill, electric griddle, electric cooker, bread maker, electric pressure cooker, waffle makers, rice cookers, and jam makers.
